# EUROPEAN PATENT APPLICATION

(11) **EP 4 803 969 A1**
(43) Date of publication of application: **09.09.2026**
(21) Application number: 24885889.6
(22) Date of filing: 01.11.2024
(51) Int. Cl.: G05D 1/617

(54) **AUTONOMOUS TRAVELING ROBOT AND METHOD FOR CONTROLLING SAME**

(30) Priority: 02.11.2023 US 202363595364 P
(71) Applicant: Rapyuta Robotics Co., Ltd., Tokyo 135-0023 (JP)
(72) Inventor: VASUDEVAN, Praveenkumar, Tokyo 135-0023 (JP); OKAMOTO, Yu, Tokyo 135-0023 (JP); SEKIYA, Makoto, Tokyo 135-0023 (JP); SHIMIZU, Takuya, Tokyo 135-0023 (JP)
(74) Representative: FRKelly
(86) International application number: PCT/JP2024/039153
(87) International publication number: WO 2025/095125

(57) **Abstract**

An autonomous mobile robot (1) includes: a sensor (50) configured to detect the presence or absence of an object within a predetermined detection range (R) in a travel direction of the autonomous mobile robot (1); and a controller (60) configured to perform designation of the detection range (R) in which the object is not detected by the sensor (50) during a travel of the autonomous mobile robot (1) as a travel-permissible region (A1) in which the travel of the autonomous mobile robot (1) is permitted, and cancel the designation as the travel-permissible region (A1) after the elapse of a predetermined period of time (t) since the designation.

## Description

### TECHNICAL FIELD

The present invention relates to an autonomous mobile robot and a method of controlling the same.

### BACKGROUND

For example, Patent Literature 1 discloses a warehouse system. In the warehouse system, trays storing articles are arranged on an accommodating shelf, and a plurality of carts are used to transport a tray from the accommodating shelf to an order preparation station for preparation of packages to be delivered. In such a warehouse system, the plurality of carts are required to travel efficiently.

[Patent Literature 1] International Publication No. WO 2018/189110

An object of the present invention is to provide an autonomous mobile robot and a method of controlling the same capable of increasing, at low cost, a range in which the autonomous mobile robot is permitted to travel.

### SUMMARY

An autonomous mobile robot according to an aspect of the present invention includes: a sensor configured to detect the presence or absence of an object within a predetermined detection range in a travel direction of the autonomous mobile robot; and a controller configured to perform designation of the detection range in which the object is not detected by the sensor during a travel of the autonomous mobile robot as a travel-permissible region in which the travel of the autonomous mobile robot is permitted, and cancel the designation as the travel-permissible region after the elapse of a predetermined period of time since the designation.

In the autonomous mobile robot according to the aspect of the present invention, the controller is configured to designate, in response to canceling the designation, the travel-permissible region as a travel-prohibited region in which the travel of the autonomous mobile robot is prohibited.

In the autonomous mobile robot according to the aspect of the present invention, the controller is configured to designate, as a travel-prohibited region in which the travel of the autonomous mobile robot is prohibited, the detection range in which the presence of the object is detected.

In the autonomous mobile robot according to the aspect of the present invention, the object includes another robot or a human worker.

In the autonomous mobile robot according to the aspect of the present invention, the predetermined period of time is set on the basis of a speed of the autonomous mobile robot.

In the autonomous mobile robot according to the aspect of the present invention, the detection range includes a warning region set at a predetermined distance or longer from the sensor and in which a speed of the autonomous mobile robot is reduced in response to the presence of the object being detected.

In the autonomous mobile robot according to the aspect of the present invention, the detection range includes a dangerous region set at a distance shorter than the predetermined distance and in which the travel of the autonomous mobile robot is stopped in response to the presence of the object being detected.

In the autonomous mobile robot according to the aspect of the present invention, the travel-permissible region is also applied to another autonomous mobile robot different from the autonomous mobile robot.

In the autonomous mobile robot according to the aspect of the present invention, the sensor includes a 3D ranging sensor.

In the autonomous mobile robot according to the aspect of the present invention, the autonomous mobile robot includes a forklift.

A method of controlling an autonomous mobile robot according to an aspect of the present invention includes: detecting, using a sensor, the presence or absence of an object within a predetermined detection range in a travel direction of the autonomous mobile robot during a travel of the autonomous mobile robot; and performing designation of the detection range in which the object is not detected during the travel of the autonomous mobile robot as a travel-permissible region in which the travel of the autonomous mobile robot is permitted, and canceling the designation as the travel-permissible region after the elapse of a predetermined period of time since the designation.

A program for controlling an autonomous mobile robot according to an aspect of the present invention causes a computer to: detect, using a sensor, the presence or absence of an object within a predetermined detection range in a travel direction of the autonomous mobile robot during a travel of the autonomous mobile robot; and perform designation of the detection range in which the object is not detected during the travel of the autonomous mobile robot as a travel-permissible region in which the travel of the autonomous mobile robot is permitted, and cancel the designation as the travel-permissible region after the elapse of a predetermined period of time since the designation.

### BRIEF DESCRIPTION OF THE DRAWINGS

Fig. 1 is a perspective view schematically illustrating a warehouse system 100 in which an autonomous mobile robot 1 according to an embodiment of the present invention is incorporated.
Fig. 2 is a perspective view schematically illustrating a structure of a forklift 1 according to the embodiment of the present invention.
Fig. 3 is a functional block diagram schematically illustrating a configuration of a management server 140.
Fig. 4 is a functional block diagram schematically illustrating a configuration of the forklift 1.
Fig. 5 is a diagram for explaining an operation of the forklift 1 during travel.
Fig. 6 is a flowchart for explaining a process of the forklift 1 according to the embodiment of the present invention during travel.

### DETAILED DESCRIPTION OF THE EMBODIMENTS

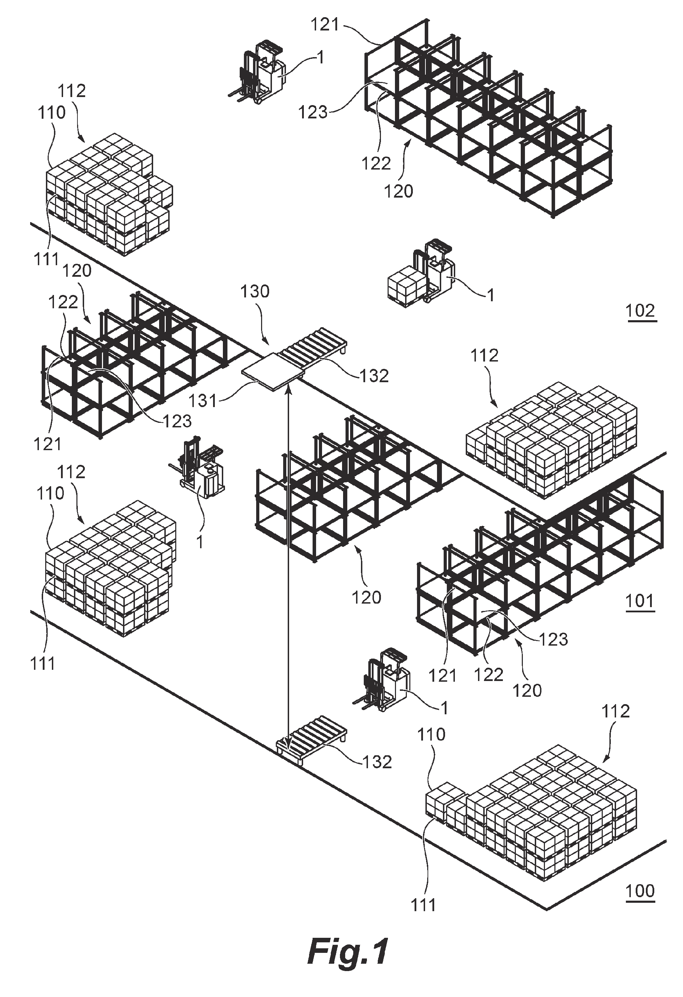

Description will be made below on an embodiment of the present invention with reference to the drawings. Fig. 1 is a perspective view schematically illustrating a warehouse system 100 in which an autonomous mobile robot 1 according to an embodiment of the present invention is incorporated. An example of the warehouse system 100 is established by, for example, a plurality of floors in a building. In this example, the warehouse system 100 includes a floor on a lower level 101 and a floor on a level higher than the lower level 101, that is, an upper level 102, as illustrated in Fig. 1. A travel path for the autonomous mobile robot 1 is formed on a floor surface on each of the lower level 101 and the upper level 102. The autonomous mobile robot 1 is in the form of, for example, a forklift 1 capable of autonomously traveling on the floor surface on each of the lower level 101 and the upper level 102 by self-localization as described later. In this example, a plurality of forklifts 1 are disposed on each of the lower level 101 and the upper level 102.

In the warehouse system 100, a temporary storage site 112 for temporarily storing a pallet 111 is defined in a predetermined region of the floor surface on each of the lower level 101 and the upper level 102, and one or more cardboard boxes 110 accommodating a large number of the same or different articles are placed on a surface of the pallet 111. In this example, the pallet 111 is placed directly on the floor surface. A plurality of temporary storage sites 112 may be defined on the floor surface. In the temporary storage site 112, for example, one or more other pallets 111, on which one or more other cardboard boxes 110 are placed, are further stacked in two tiers on the cardboard boxes 110 placed on the pallet 111. It should be noted that the pallets 111 are formed in the shape of, for example, a flat plate that is rectangular or square in plan view. A pair of insertion openings for inserting a fork of a forklift are formed in each of four side surfaces of the pallet 111, and the four side surfaces connect a front surface and a back surface facing away from each other.

The warehouse system 100 includes a rack 120 disposed on the floor surface on each of the lower level 101 and the upper level 102. The rack 120 is, for example, a storage shelf for storing the above-described one or more cardboard boxes 110 while they are placed on the pallet 111. The rack 120 is a storage shelf for strong the articles on the pallet 111. The rack 120 includes, for example, a plurality of rack units 122 formed of a metal frame member 121. The rack 120 is formed by stacking the plurality of rack units 122 in a height direction and simultaneously coupling the rack units 122 adjacent in a width direction and a length direction that are parallel with the floor surface. In this example, two of the rack units 122 are coupled to each other in each of the height direction and the width direction, and the plurality of rack units 122 are coupled to one another in the length direction.

Each of the rack units 122 defines one accommodating space 123 that accommodates the pallet 111 on which the one or more cardboard boxes 110 are placed. The fork of the forklift 1 can access the accommodating space 123 through a side surface of the rack 120. Consequently, the forklift 1 can load the pallet 111 into the accommodating space 123 through the side surface of the rack 120 and unload the pallet 111 out of the accommodating space 123 through the side surface of the rack 120. It should be noted that the number of the rack units 122 constituting the above-described rack 120 in the height direction or the length direction is merely an example and any other number of the rack units 122 may be coupled to each other to form the rack 120.

The warehouse system 100 includes a vertical transport device 130 capable of transporting the pallet 111 on which the one or more cardboard boxes 110 are placed between the lower level 101 and the upper level 102. It should be noted that the vertical transport device 130 is also able to transport only the pallet 111. Moreover, the vertical transport device 130 may transport, for example, a metal mesh pallet in place of the pallet 111. The vertical transport device 130 includes a transport mechanism 131 movable up and down in a vertical transport space and a conveyor 132 extending to the transport mechanism 131 on each of the lower level 101 and the upper level 102. The conveyor 132 is able to, for example, transport the pallet 111, which is transported to the conveyor 132 by the forklift 1, to the transport mechanism 131 and transport the pallet 111, which is transported by the transport mechanism 131, to the front of the forklift 1. The transport mechanism 131 is able to transport the pallet 111, which is transported by the conveyor 132, from the lower level 101 to the upper level 102 or from the upper level 102 to the lower level 101.

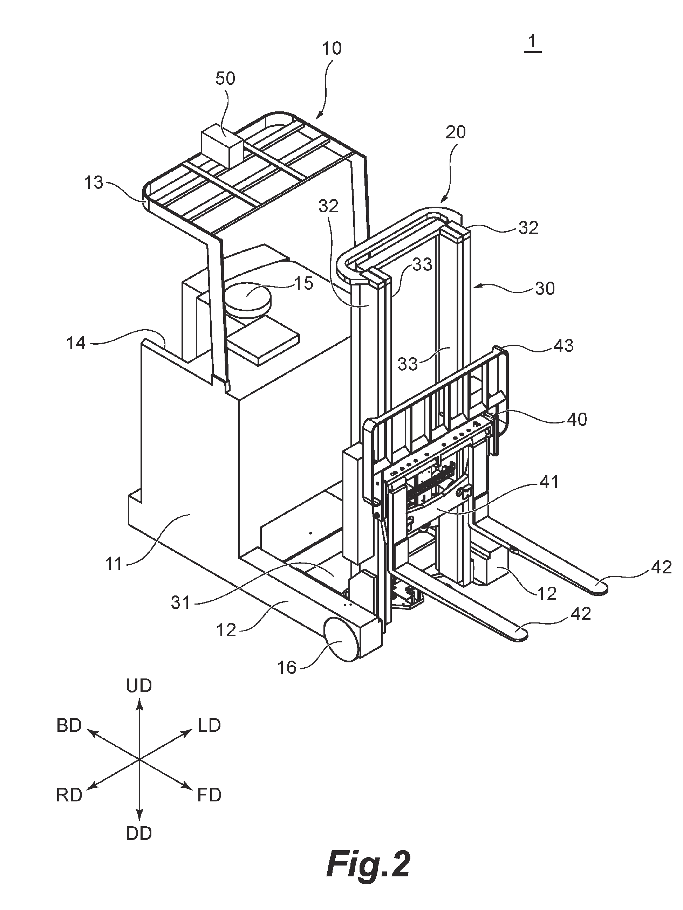

In a plan view of the floor surface of each of the lower level 101 and the upper level 102, a region other than the region in which the temporary storage site 112 is defined and the region in which the rack 120 is disposed is defined as a movement path for the forklift 1. Incidentally, a predetermined region around the temporary storage site 112 and a predetermined region around the rack 120 are defined as a buffer region into which entry of forklift 1 is restricted. Fig. 2 is a perspective view schematically illustrating a structure of the forklift 1 according to the embodiment of the present invention. The forklift 1 is used to transport the cardboard box 110 or an article placed on the pallet 111 to a variety of positions within the warehouse system 100. It should be noted that the forklift 1 is able to transport not only the pallet 11 on which the cardboard box 110 is placed but also one or more pallets 111 on which no cardboard box 110 is placed. The forklift 1 is able to not only autonomously travel on the basis of self-localization within the warehouse system 100 as described above but also manually travel in accordance with an operator's operation.

It should be noted that in the following, a direction toward a front side of the forklift 1 with respect to a front-back direction of the forklift 1 is defined as a forward direction FD, whereas a direction toward a back side of the forklift 1 opposite to the forward direction FD is defined as a backward direction BD. Likewise, a direction toward an upper side of the forklift 1 with respect to a height direction of the forklift 1 is defined as an upward direction UD, whereas a direction toward a lower side of the forklift 1 opposite to the upward direction UD is defined as a downward direction DD. Further, a direction toward a left side of the forklift 1 with respect to a right-left direction of the forklift 1 is defined as a leftward direction LD, whereas a direction toward a right side of the forklift 1 opposite to the leftward direction LD is defined as a rightward direction RD.

The forklift 1 includes a vehicle body 10 and a cargo handling assembly 20 disposed at a front end of the vehicle body 10. The vehicle body 10 includes a main body 11, a pair of straddle legs 12, 12 extending from the front end of the main body 11 in the forward direction FD in parallel with each other, and a head guard 13 attached to an upper end of the main body 11. The main body 11 includes a driver's seat 14 where an operator can stand at, for example, a rear end thereof and an operation unit 15 for the operator to operate the forklift 1 on an upper surface thereof. The cargo handling assembly 20 is disposed between the straddle legs 12, 12. The head guard 13 prevents a package or an object from falling toward the operator from above.

The vehicle body 10 includes a pair of front wheels 16 disposed on lower portions of the respective straddle legs 12, 12 and, for example, a single rear wheel (not illustrated) disposed on a lower portion of the main body 11. The rear wheel is connected to a drive motor (not illustrated), for example, incorporated in the main body 11. Electric power is to be supplied to the drive motor from a battery (not illustrated), for example, likewise incorporated in the main body 11. That is to say, the rear wheel is a drive wheel, whereas the front wheels 16 are idler wheels. The rear wheel is disposed such that it is, for example, offset in the leftward direction LD from a center of the forklift 1 in the right-left direction. The rear wheel is driven in a travel direction while an angle thereof is changed in the right-left direction, which enables the forklift 1 to move forward, backward, leftward, and rightward. It should be noted that in transporting the pallet 111, the forklift 1 travels in the backward direction BD.

The cargo handling assembly 20 is an assembly capable of lifting and lowering the pallet 111. The cargo handling assembly 20 includes a mast assembly 30 and a fork assembly 40. The mast assembly 30 is supported between the pair of straddle legs 12, 12 while being movable in the forward direction FD and the backward direction BD. The fork assembly 40 is supported on a front end of the mast assembly 30 while being movable in the upward direction UD and the downward direction DD. It should be noted that in a state illustrated in Fig. 1, the mast assembly 30 is placed at a position reached when moved as much as possible in the forward direction FD. Moreover, the fork assembly 40 is placed at a position reached when moved upward in the upward direction UD from the lowermost position.

The mast assembly 30 includes a base 31 disposed between the pair of straddle legs 12, 12, a pair of outer masts 32, 32 standing upright in the upward direction UD from the base 31, and a pair of inner masts 33, 33 disposed on inner sides of the pair of respective outer masts 32, 32 in the leftward direction LD and the rightward direction RD. The outer masts 32, 32 are formed integrally with, for example, a front end of the base 31. The outer masts 32, 32 are spaced from each other at a predetermined distance in the right-left direction. The base 31, the outer masts 32, 32, and the inner masts 33, 33 are supported between the pair of straddle legs 12, 12 while being movable in the forward direction FD and the backward direction BD.

The inner masts 33, 33 stand upright in the height direction while being adjacent to the inner sides in the right-left direction of the respective outer masts 32, 32. The inner masts 33, 33 are supported by the outer masts 32, 32 so that the inner masts 33, 33 are relatively movable in the height direction with respect to the respective outer masts 32, 32. The fork assembly 40 is supported by the inner masts 33, 33 so that the fork assembly 40 is relatively movable in the height direction with respect to the inner masts 33, 33. It should be noted that the fork assembly 40 is supported by the outer masts 32 via the inner masts 33, 33, so that the fork assembly 40 is movable in the forward direction FD and the backward direction BD along with a bracket 41, the outer masts 32, and the inner masts 33.

The fork assembly 40 includes the bracket 41, a pair of forks 42, 42, and a backrest 43. The bracket 41 is supported by the inner masts 33, 33 while being relatively movable in the height direction with respect to the inner mast 33, 33. The pair of forks 42, 42 are attached to a front surface of the bracket 41. The pair of forks 42, 42 each extend from the bracket 41 in the forward direction FD at, for example, a position where one of the outer masts 32 and one of the inner masts 33 are disposed in the right-left direction. The backrest 43 is attached to, for example, an upper end of the bracket 41. The backrest 43 prevents a package on the pallet lifted by the forks 42 from falling behind the fork assembly 40.

The forklift 1 includes a ranging sensor 50 attached to a top of the head guard 13 along a rear end of the head guard 13 in this example. The ranging sensor 50 is disposed at, for example, a center in the right-left direction of the forklift 1. The ranging sensor 50 is a 3D LiDAR (optical detection and ranging) sensor capable of detecting the presence or absence of an object (if an object is present, the shape of the object) within a predetermined three-dimensional detection range in the backward direction BD of the forklift 1. Specifically, the ranging sensor 50 acquires 3D point cloud data regarding the object within the detection range by irradiating the detection range with a laser beam. The 3D point cloud data is a set of points having three-dimensional coordinates within the three-dimensional detection range. The 3D point cloud data includes coordinates and color information regarding each point, and the presence or absence of an object within the detection range is to be detected by measuring a distance from the ranging sensor 50 to each point.

The three-dimensional detection range of the ranging sensor 50 includes, for example, a predetermined angular range in the right-left direction of the forklift 1 and a predetermined angular range in the height direction of the forklift 1 at a predetermined irradiation distance from the forklift 1 toward the backward direction BD. In an example of the ranging sensor 50, the irradiation distance is set to 3 m, the angular range in the right-left direction is set to 145 degrees, and the angular range in the height direction is set to 60 degrees. Moreover, a frequency of the laser beam of the ranging sensor 50 is set in, for example, a range from 5 to 10 Hz. These numeral values regarding the ranging sensor 50 are provided merely by way of example and other numeral values may be set. Moreover, although the ranging sensor 50 is attached to the top of the head guard 13, the ranging sensor 50 may be attached to, for example, a rear end of the main body 11 of the vehicle body 10 of the forklift 1 as long as it is possible to apply the laser beam in the backward direction BD.

It should be noted that the forklift 1 may further include, for example, three ranging sensors (not illustrated) that detect the presence or absence of an object within a detection range in the forward direction FD and the rightward direction RD, a detection range in the forward direction FD and the leftward direction LD, and a detection range in the backward direction BD. These ranging sensors are, for example, 2D LiDAR sensors. For example, one of the ranging sensors may be attached to a front end of each of the straddle legs 12 and the other one of the ranging sensors may be attached at a rear lower end position of the main body 11. These three ranging sensors are disposed at the same level above the floor surface. These ranging sensors make it possible to detect the presence or absence of an object within two-dimensional detection ranges over 360 degrees in a horizontal direction at the level of the ranging sensors. These ranging sensors may be used to generate a two-dimensional map of an arrangement layout of the temporary storage site 112 and the rack 120 by mapping the lower level 101 and the upper level 102 of the warehouse system 100. It should be noted that 3D LiDARs may be used as the ranging sensors to generate a three-dimensional map of the arrangement layout.

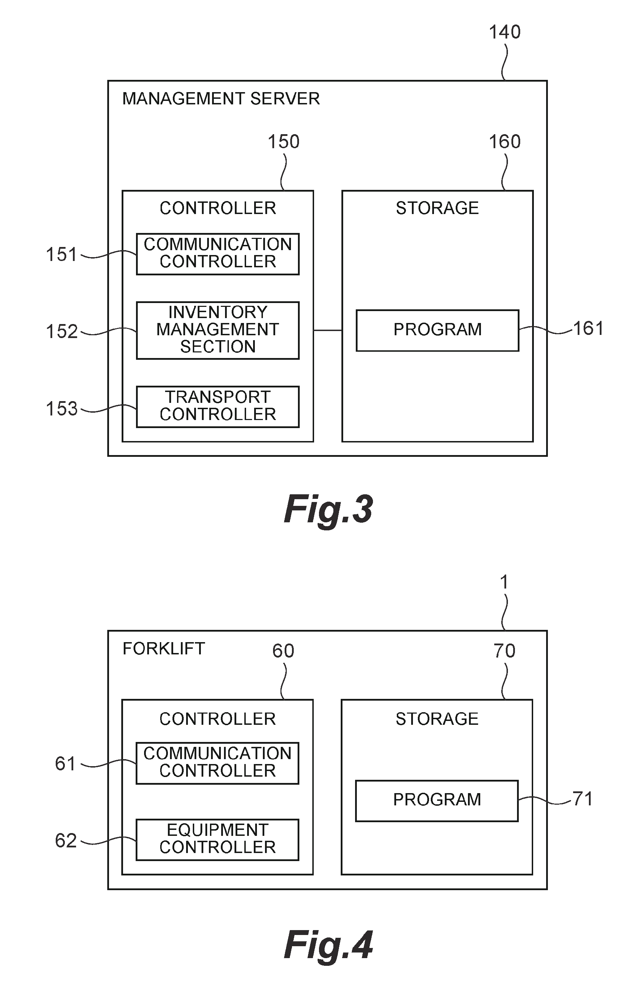

As illustrated in Fig. 3, the warehouse system 100 includes a management server 140 that manages an operation of the forklift 1, a storage status of articles in the temporary storage site 112 and the rack 120, and the like in connection with the receiving, storage, and shipping of articles. The management is to be performed by a controller (a computer) executing a program stored in a storage as described later. Specifically, these processes are to be performed in accordance with information processing described in the program. That is to say, when the program is read by the controller, the information processing described in the program functions as a specific means in which software related to the program cooperates with a variety of hardware resources of the warehouse system 100.

The management server 140 includes a controller 150 and a storage 160. The controller 150 includes a communication controller 151, an inventory management section 152, and a transport controller 153. The storage 160 stores a program 161 for controlling processes related to the receiving, storage, and shipping of articles in the warehouse system 100. The storage 160 stores, in addition to the program 161, information regarding articles stored in the temporary storage site 112 and the rack 120 (for example, information for managing which articles are stored at which locations, etc.), a two-dimensional map showing the arrangement layout of the temporary storage site 112 and the rack 120 in the warehouse system 100, and the like. The controller 150 manages the warehouse system 100 by executing the program 161 stored in the storage 160. The management server 140 may be implemented by, for example, a physical server installed in the building in which the warehouse system 100 is established or may be implemented by, for example, a cloud server built on the Internet.

The communication controller 151 controls communication between the management server 140 and the forklift 1. A communication scheme may be, for example, Wi-Fi (registered trademark), Bluetooth (registered trademark), or the like. The inventory management section 152 manages an inventory status of the warehouse system 100. Specifically, the inventory management section 152 manages information for identifying each article (SKU), information regarding the inventory quantity of each article identified by the SKU, information (ID) for identifying the position where the article is stored, and the like in association with one another. The transport controller 153 manages and controls the operation of the forklift 1. Specifically, the transport controller 153 generates a transport instruction to the forklift 1, indicating which article at which location in the warehouse system 100 is to be transported to which location.

The generation of a transport instruction by the transport controller 153 will be specifically described. The transport controller 153 generates a transport instruction to a predetermined forklift 1 for each receiving or shipping process in the warehouse system 100. A case with a command for transporting articles only on the lower level 101 or the upper level 102 is as follows. The transport instruction in this case includes, for example, a) a first movement path from a current position of the forklift 1 to a specified pallet 111, b) a command regarding a picking operation to pick the specified pallet 111, c) a second movement path for transporting the specified pallet 111 to a specified location, and d) a command regarding a dropping operation to drop the specified pallet 111 at the specified location.

In contrast, a case with an instruction for transport from the lower level 101 to the upper level 102 or from the upper level 102 to the lower level 101 is as follows. Specifically, the transport instruction includes a first transport instruction to the forklift 1 disposed on one of the levels and a second transport instruction to the forklift 1 disposed on the other level. The first transport instruction includes a) a first movement path from a current position of the forklift 1 to a specified pallet 111, b) a command regarding a picking operation to pick the specified pallet 111, c) a second movement path to the conveyor 132 of the vertical transport device 130, and d) a command regarding a dropping operation to drop the specified pallet 111 onto the conveyor 132.

In contrast, the second transport instruction includes a) a first movement path from a current position of the forklift 1 to the conveyor 132 of the vertical transport device 130, b) a command regarding a picking operation to pick the specified pallet 111, c) a second movement path to a specified location to which the specified pallet 111 is to be transported, and d) a command regarding a dropping operation to drop the specified pallet 111 at the specified location. Consequently, in a case with the instruction for transport from the lower level 101 to the upper level 102 or the instruction for transport from the upper level 102 to the lower level 101, instructions are to be sent to the respective forklifts 1. It should be noted that the first movement path and the second movement path are not necessarily the shortest paths and may be schematic paths on which the forklift 1 is movable on a map of the warehouse system 100. That is to say, the movement path is a path on which no object that obstructs the travel of the forklift 1 is present. That is to say, no reference object (for example, the rack 120, a wall, or the like) used as a reference for self-localization by the forklift 1 is present on the movement path.

Fig. 4 is a functional block diagram schematically illustrating a configuration of the forklift 1. The forklift 1 includes a controller 60 and a storage 70. The controller 60 includes a communication controller 61 and an equipment controller 62. The storage 70 stores a program 71 for controlling the operation of the forklift 1. The storage 70 stores the two-dimensional map showing the arrangement layout of the temporary storage site 112 and the rack 120 in the warehouse system 100, and the like in addition to the program 71. It should be noted that the map is shared with the management server 140. For example, the forklift 1 performs mapping of the lower level 101 and the upper level 102 using the ranging (2D LiDAR) sensors to generate the map as described above. The controller 60 controls the operation of the forklift 1 by executing the program 71 stored in the storage 70.

The communication controller 61 controls communication between the management server 140 and the forklift 1. The equipment controller 62 controls the operation of the forklift 1. Specifically, the equipment controller 62 is able to control forward movement, backward movement, and turning to the right and left of the forklift 1 based on the driving of the rear wheel, and the operation for picking or dropping the pallet 111 based on the driving of the mast assembly 30 and the fork assembly 40 of the cargo handling assembly 20. Moreover, the equipment controller 62 further manages, during the travel of the forklift 1 on the lower level 101 and the upper level 102, a travel-permissible region in which the travel of the forklift 1 is permitted and a travel-prohibited region in which the travel of the forklift 1 is not permitted, that is, the travel of the forklift 1 is prohibited, as described later.

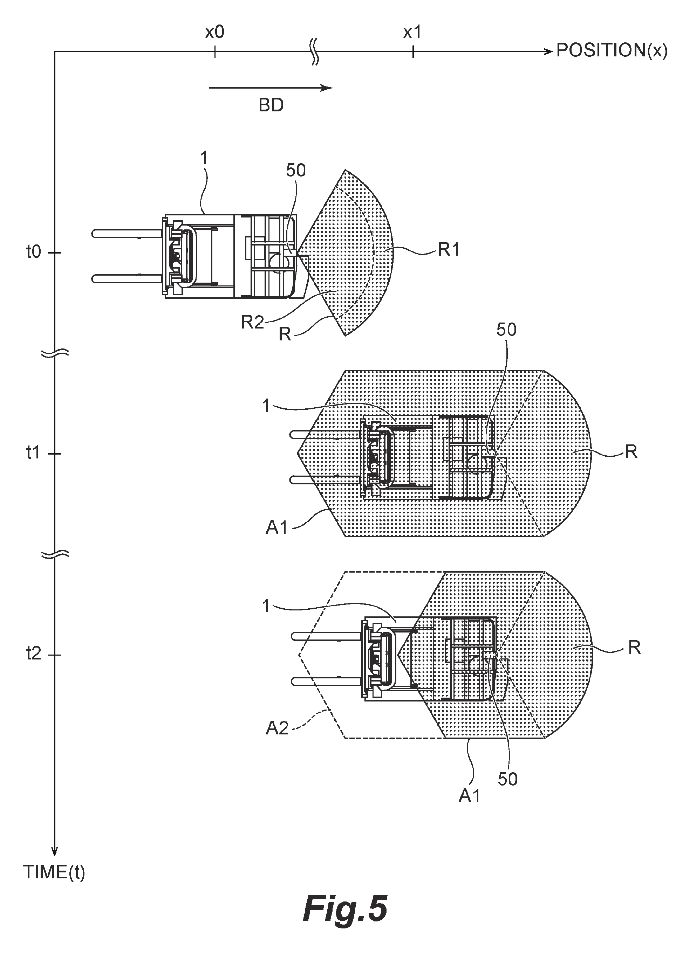

Fig. 5 is a diagram for explaining the operation during the forklift 1. In this example, a scene in which the forklift 1 travels toward the backward direction BD is assumed. At a time point of a time t0, the forklift 1 is stopped at a position x0. The ranging sensor 50 irradiates a three-dimensional detection range R in the backward direction BD with a laser beam to acquire 3D point cloud data regarding the detection range R. It should be noted that within the detection range R, a region at the predetermined distance or longer from the ranging sensor 50 is defined as a warning region R1 and a region at a distance shorter than the predetermined distance from the ranging sensor 50 is defined as a dangerous region R2. When an object is detected within the warning region R1 on the basis of the 3D point cloud data, a speed of the forklift 1 is reduced. In contrast, when an object is detected within the dangerous region R2, the forklift 1 stops. The object includes, for example, another robot, a human worker, any obstacle, and the like.

The forklift 1 is able to travel on the floor surface at a speed of, for example, 1.4 m per second. Here, the forklift 1 starts traveling from the position x0. The forklift 1 reaches a position x1 and stops there at a time t1 without detection of an object within the detection range R during travel. In this case, the detection range R detected at a predetermined time interval from the time t0 to the time t1 is designated as a travel-permissible region A1 in which the travel of the forklift 1 is permitted. For example, the forklift 1 is able to freely travel within the designated travel-permissible region A1. Here, in a case where the forklift 1 is stopped at the position x1 during a period from the time t1 to a time t2, the designation as the predetermined travel-permissible region A1 is canceled in accordance with an elapsed time from the time t1 to the time t2. Specifically, the travel-permissible region A1 after the elapse of a predetermined threshold period of time since the designation is designated as a travel-prohibited region A2 in which the travel of the forklift 1 is not permitted.

The thus designated travel-permissible region A1 and travel-prohibited region A2 may be generated as a cost map overlaid on the map held by the forklift 1. That is to say, the cost map shows regions defined as the travel-permissible region A1 and the travel-prohibited region A2 on the map. The cost map only has to be stored in the forklift 1 but may be sent to the management server 140 and also stored in the storage 160 of the management server 140. Moreover, the cost map may be shared with another forklift 1 via the management server 140. Consequently, the travel-permissible region A1 and the travel-prohibited region A2 designated by the forklift 1 can be applied to the other forklift 1. Specifically, the travel-permissible region A1 and the travel-prohibited region A2 designated by the forklift 1 may be referred to in setting, for example, a movement path for another forklift 1, which makes it possible to set the movement path bypassing, for example, the travel-prohibited region A2. Considering a group of forklifts 1, information from one of the forklifts 1 may be used in a case where, for example, a person is near a destination invisible to another forklift 1 so as to set a movement path for the other forklift 1. Such information sharing is useful for adjustment among the group of forklifts 1, reducing costs to improve the efficiency of the system. Moreover, the predetermined period of time before the designation as the travel-permissible region A1 is canceled and designation as the travel-prohibited region A2 is performed is determined in consideration of a variety of factors. The predetermined period of time may be determined in accordance with, for example, the speed of the forklift 1, time at which another object (for example, another robot, a huma worker, or the like) is expected to enter the travel-permissible region A1, or the like.

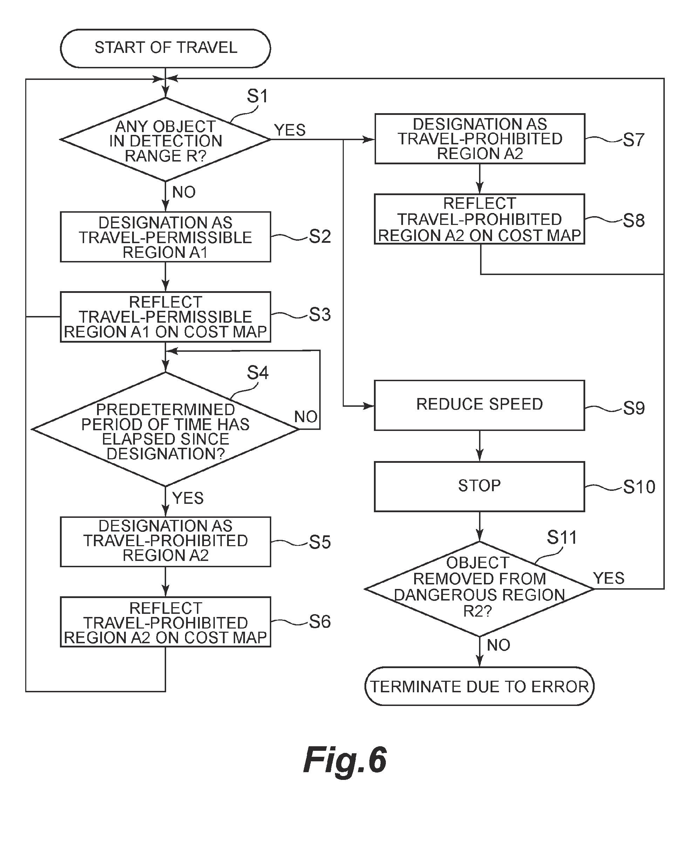

Fig. 6 is a flowchart for explaining a process of the forklift 1 according to the embodiment of the present invention. A transport instruction is sent from the transport controller 153 of the management server 140 to a predetermined forklift 1. The forklift 1 having received the transport instruction moves from a current position to a specified picking position in accordance with the transport instruction. During the travel for movement, the ranging sensor 50 detects the presence or absence of an object within the detection range R at a time t on the basis of the 3D point cloud data regarding the detection range R acquired at the predetermined time interval (Step S1). In response to no object being detected (Step S1, NO), the detection range R at the time t is designated as the travel-permissible region A1 (Step S2). The designated travel-permissible region A1 is reflected on the cost map in the storage 70 on the basis of, for example, coordinate values defining a two-dimensional region in a plan view of a three-dimensional space of the detection range R (Step S3). After that, the process returns to Step S1.

Meanwhile, an elapsed time after the designation as the travel-permissible region A1 is observed on the cost map (Step S4). In response to the predetermined period of time having not elapsed after the designation as the travel-permissible region A1 (Step S4, NO), the process returns to Step S4. In contrast, at the time of elapse of the predetermined period of time since the designation (Step S4, YES), the designation as the travel-permissible region A1 is canceled. That is to say, the travel-permissible region A1 is designated as the travel-prohibited region A2 (Step S5). The designated travel-prohibited region A2 is reflected on the cost map in the storage 70 on the basis of, for example, the coordinate values defining the two-dimensional region in the plan view of the three-dimensional space of the detection range R (Step S6). After that, the process returns to Step S1. Consequently, the regions forming the travel-permissible region A1 and the travel-prohibited region A2 are dynamically updated on the cost map.

In contrast, in response to detection of an object within the detection range R at a time t during the travel of the forklift 1 (Step S1, YES), the detection range R at the time t is designated as the travel-prohibited region A2 (Step S7). The designated travel-prohibited region A2 is reflected on the cost map in the storage 70 (Step S8). After that, the process returns to Step S1. Moreover, a process in Step S9 is performed at the same time as Step S7. Specifically, since the object first enters the warning region R1 in the detection range R, the speed of the forklift 1 is reduced (Step S9). Further, when the object enters the dangerous region R2 due to the travel of the forklift 1, the forklift 1 stops at the time t (Step S10). After that, it is observed whether or not the object is removed from the dangerous region R2 (Step S11), and in a case where the object is not removed (Step S11, NO), the transport process of the forklift 1 is terminated due to an error. After that, the operation of the forklift 1 based on the transport instruction is restarted by, for example, 1) removing the object from the dangerous region R2, 2) clearing the error by operating a switch provided in the forklift 1, or the like, and 3) clearing the error on the program 71. It should be noted that , the operation in 2) may be omitted.

In contrast, in response to removal of the object from the dangerous region R2 (Step S11, YES), the process returns to Step S1. The above-described process is performed during the travel of the forklift 1. Specifically, the process may be performed while the forklift 1 travels from the current position to a picking position for the specified pallet 111 and while the forklift 1 travels from the picking position to a specified dropping position for the pallet 111. When the travel of the forklift 1 stops, the above-described process is temporarily suspended. It should be noted that although description is made on the processes to designate the travel-permissible region A1 and the travel-prohibited region A2 during the process to transport the pallet 111 in this example, these processes may be performed during the travel of the forklift 1 in a scene other than the transport process. Moreover, in the above-described processes, it may also be determined whether or not the picking operation or the dropping operation is permitted in accordance with whether or not an object is detected during the picking operation for the pallet 111 at the picking position and the dropping operation for the pallet 111 at the dropping position. For example, in a case where an object is detected in the detection range R during the picking operation or the dropping operation, the operation of the forklift 1 may be restarted after the object is removed and the error is cleared by operating the switch or on the program 71 as described above.

In the warehouse system 100 as described above, the forklift 1 is able to detect the presence or absence of an object within the detection range R in the backward direction BD using the ranging sensor 50, while the forklift 1 travels for the transport process for the pallet 111 on which the one or more cardboard boxes 110 are placed. The detection range R in which no object is detected is designated as the travel-permissible region A1. Consequently, the number of the travel-permissible regions A1 increases as time elapses during the travel of the forklift 1. Meanwhile, after the elapse of the predetermined period of time since the designation, the travel-permissible region A1 is designated as the travel-prohibited region A2. That is to say, the number of travel-permissible regions A1 decreases as time elapses. Consequently, a range in which the forklift 1 is allowed to travel safely is defined by the travel-permissible region A1 dynamically changing during the travel of the forklift 1. The ranging sensor 50 is incorporated in the forklift 1, which makes it possible to generate such a range allowing for a safe travel at low cost. It should be noted that although the above-described embodiment is described with the forklift 1 as an example of the autonomous mobile robot, the autonomous mobile robot may be applied to robots other than the forklift 1. The forklift 1 may be incorporated with a fork assembly including a pair of clamps that sandwich the cardboard box 110 or the like from opposite sides in place of the pair of forks 42, 42.

Throughout all the drawings, the same reference numerals are used to refer to the same or similar components. The following embodiments are not intended to limit the invention according to the claims. Although the features of the present invention are described herein, various changes and modifications may be made without departing from the spirit and scope of the disclosed embodiments. Further, specific features, structures, or characteristics may be combined in any suitable manner in one or more embodiments. The following detailed description is considered only as an example, and the true scope and spirit are intended to be indicated by the claims.

## Claims

1. An autonomous mobile robot comprising:
a sensor configured to detect presence or absence of an object within a predetermined detection range in a travel direction of the autonomous mobile robot; and
a controller configured to perform designation of the detection range in which the object is not detected by the sensor during a travel of the autonomous mobile robot as a travel-permissible region in which the travel of the autonomous mobile robot is permitted, and cancel the designation as the travel-permissible region after elapse of a predetermined period of time since the designation.

2. The autonomous mobile robot according to claim 1, wherein the controller is configured to designate, in response to canceling the designation, the travel-permissible region as a travel-prohibited region in which the travel of the autonomous mobile robot is prohibited.

3. The autonomous mobile robot according to claim 1, wherein the controller is configured to designate, as a travel-prohibited region in which the travel of the autonomous mobile robot is prohibited, the detection range in which the presence of the object is detected.

4. The autonomous mobile robot according to claim 1, wherein the object includes another robot or a human worker.

5. The autonomous mobile robot according to claim 1, wherein the predetermined period of time is set on a basis of a speed of the autonomous mobile robot.

6. The autonomous mobile robot according to claim 1, wherein the detection range includes a warning region set at a predetermined distance or longer from the sensor and in which a speed of the autonomous mobile robot is reduced in response to the presence of the object being detected.

7. The autonomous mobile robot according to claim 6, wherein the detection range includes a dangerous region set at a distance shorter than the predetermined distance and in which the travel of the autonomous mobile robot is stopped in response to the presence of the object being detected.

8. The autonomous mobile robot according to claim 1, wherein the travel-permissible region is also applied to another autonomous mobile robot different from the autonomous mobile robot.

9. The autonomous mobile robot according to claim 1, wherein the sensor includes a 3D ranging sensor.

10. The autonomous mobile robot according to claim 1, wherein the autonomous mobile robot includes a forklift.

11. A method of controlling an autonomous mobile robot, the method comprising:
detecting, using a sensor, presence or absence of an object within a predetermined detection range in a travel direction of the autonomous mobile robot during a travel of the autonomous mobile robot; and
performing designation of the detection range in which the object is not detected during the travel of the autonomous mobile robot as a travel-permissible region in which the travel of the autonomous mobile robot is permitted, and canceling the designation as the travel-permissible region after elapse of a predetermined period of time since the designation.

12. A program for controlling an autonomous mobile robot, the program causing a computer to:
detect, using a sensor, presence or absence of an object within a predetermined detection range in a travel direction of the autonomous mobile robot during a travel of the autonomous mobile robot; and
perform designation of the detection range in which the object is not detected during the travel of the autonomous mobile robot as a travel-permissible region in which the travel of the autonomous mobile robot is permitted, and cancel the designation as the travel-permissible region after elapse of a predetermined period of time since the designation.
